Europäisches Patentamt

(19) **European Patent Office**

**Office européen des brevets**

(11) Publication number: **0 055 516**
A2

(12) **EUROPEAN PATENT APPLICATION**

(21) Application number: **81305378.2**

(22) Date of filing: **12.11.81**

(51) Int. Cl.³: **B 60 C 23/06**

(30) Priority: **30.12.80 AU 7084/80**

(43) Date of publication of application:
**07.07.82 Bulletin 82/27**

(84) Designated Contracting States:
**DE FR GB IT NL**

(71) Applicant: **Koulouris, Stamatios**
**500 Hay Street**
**Perth Western Australia(AU)**

(72) Inventor: **Koulouris, Stamatios**
**500 Hay Street**
**Perth Western Australia(AU)**

(74) Representative: **Matthews, Howard Nicholas et al,**
**MATTHEWS HADDAN & CO HADDAN HOUSE 33**
**Elmfield Road**
**Bromley Kent BR1 1SU(GB)**

(54) **Tyre warning device.**

(57) A tyre indicator comprising a base adapted to be mounted to a vehicle chassis adjacent a wheel of the vehicle, an arm pivotally mounted to said base, said arm being biassed such that a portion thereof is maintained in constant engagement with the side walls of the tyre; a sensor sensitive to the displacement of the arm with respect of the base; and a signalling device at the driving station of said vehicle to provide a signal indicating the state of displacement of the arm with respect to the base.

Fig.1.

EP 0 055 516 A2

1

THIS INVENTION relates to a device for indicating the state of inflation of a tyre of a vehicle.

Previously, devices for indicating the state of inflation of a tyre on a vehicle have been of a critical state type indicators which provide a signal only on the tyre reaching a particular stage of deflation and usually when the tyre has reached a deflation figure at which it is unsuitable for further use. In addition, any such prior art devices have been wheel mounted devices which on the critical state being attained produce an audible signal at the wheel with rotation of the wheel.

Another form of prior art device comprises a pressure operated unit which on deflation of the tyre to a minimum critical value causes a magnet to move to a position where it will activate a reed switch located on the chassis of the vehicle on rotation of the wheel.

It is an object of this invention to provide an indicator of tyre inflation which provides an output signal observable by the operator of the vehicle at the normal driving station.

It is a further object of this invention to provide an indicator of tyre inflation which can provide an output indicating the current state of inflation of a tyre whenever such an indication is desired.

In one form the invention resides in a tyre inflation indicator comprising; a base adapted to be mounted to a vehicle's chassis adjacent a wheel of the vehicle; an arm pivotally mounted to said base; said arm being biased such that a portion thereof is maintained in constant engagement with a side wall of said tyre, a sensor which is sensitive to the position of the arm with respect to the base; and a signalling device connected to said sensor for signalling the position of the arm.

2

According to a preferred feature of the invention, said portion of said arm incorporates a means of reducing the friction of the engagement between said arm and said side wall.

According to a preferred feature of the last mentioned feature, said means of reducing friction comprises a roller rotatably mounted to said arm about at least one axis which is transverse to the direction of movement of the side wall past the arm.

According to a further preferred feature of the invention, said arm is pivotally mounted to said base via a shaft rotatably received in said base, said sensor comprises a potentiometer drivingly connected to said shaft, and said signalling device comprises an electrical circuit for translating the potential across said potentiometer into a visual and/or audio signal the magnitude of which is proportional to the magnitude of the potential.

According to a further preferred feature, said sensor also includes a switch activated on the movement of said arm past a predetermined point in its range of movement.

In another form the invention resides in a vehicle having a tyre indicator of the form described above adjacent each wheel of the vehicle and wherein said signalling device is capable of sequentially signalling the output of each sensor.

The invention will be more fully understood in the light of the following description of several specific embodiments. The description is made with reference to the accompanying drawings of which;

Figure 1 is a sectional elevation of a wheel mounting from a vehicle illustrating the mounting of the sensor of the embodiment to the vehicle;

Figure 2 is a plan view of the mounting shown in figure 1;

Figure 3 is an end elevational view of the mounting of figures 1 and 2;

Figures 4, 5, 6, 7 and 8 are plan views of differing arrangements for mounting the sensor adjacent the tyres of a multi-wheeled arrangement;

Figure 9 is a circuit diagram of the circuit associated with the embodiment; and

Figure 10 is an oblique exploded view of the sensor of the embodiment.

The embodiment is directed towards a device for sensing the state of inflation of a tyre and providing a signal for the driver of the vehicle at the driving position of the vehicle indicating the state of inflation of the tyre. The sensor 11 of the embodiment, as shown in figure 10, comprises a base 41 which pivotally supports at one end an arm 42 by means of a shaft 44. The free end of the arm supports a roller 43 rotatably mounted thereto. The mounting of the roller to the arm is such as to provide minimum opportunity for the access of foreign material into the bearing supporting the roller on the arm.

One form of roller mounting comprises forming the roller with a central recess at one side face only wherein the central recess is intended to accommodate the bearing which is received on a pin extending transversly from the arm. The arm takes the form of a plate and the roller is located on the pin such that one side face is in close abutting relationship with the arm. As a result the bearing is protected from the entry of foreign material by the close abutting relationship between the roller and plate.

The central axis of the shaft and the axis of rotation of the roller are substantially parallel and are transverse to the direction of travel of the tyre sidewall at the point of contact with the roller 13. The free end of the shaft is connected to a potentiometer 45. The shaft 14 supports a radial protrusion 18 which extends through a slot 49 formed in the journal supporting the shaft. The slot 49 is sufficiently wide to accommodate the movement of the radial protrusion 48 with rotation of the shaft. The outer end of the radial protrusion is engaged by one end of a spring 47 the other end of which is fixed to the base 41 and a microswitch 50 is mounted adjacent the spring 17 such that the toggle 51 of the switch is located between a pair of adjacent coils of the spring 47. The spring 47 serves in biasing the arm 42 to a position in which the roller 43 is in rolling engagement with the side wall of the tyre. As the tyre varies in its state of inflation the displacement of the side walls thereof vary, particularly as the tyre approaches a critical state of deflation. This variation of inflation is reflected in the displacement of the arm 42 and the resistance of the potentiometer 45. By connection of the potentiometer into a suitable circuit which measures the potential across the potentiometer an indicator of the state of inflation of the tyre can be obtained from an analogue or digital readout. The microswitch 50 serves in sensing when the spring 47 has reached a predetermined state of extension which corresponds to a particular position of the arm and a particular state of inflation of the tyre. The microswitch is connected to a visual and audio signalling means for indicating that the particular state of inflation of the tyre has been reached.

As a result of the embodiment a continuous measure of tyre inflation can be given by means of the potentiometer 45 and an indicator of a critical state of inflation can be given by means of the microswitch 50.

To mount the sensor 11 in position adjacent the tyre, the base 41 is of an elongate nature with the arm 42 mounted towards one end of the base and the remaining portion of the base is formed with an elongate central slot 46 by which the base is to be mounted to the chassis of a vehicle.

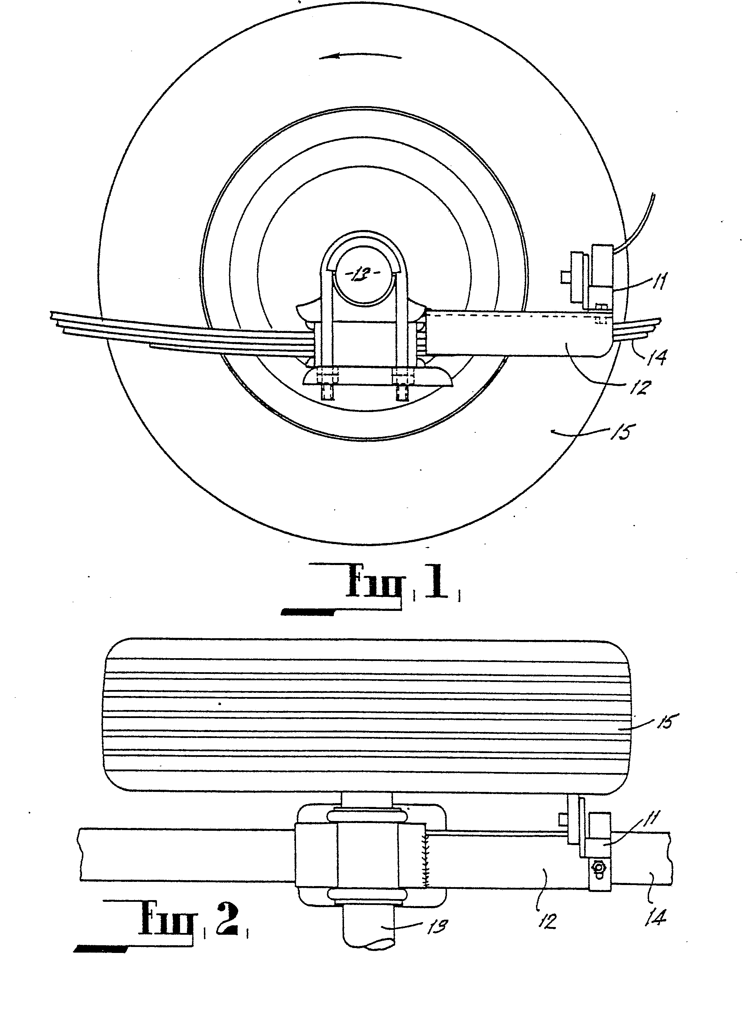

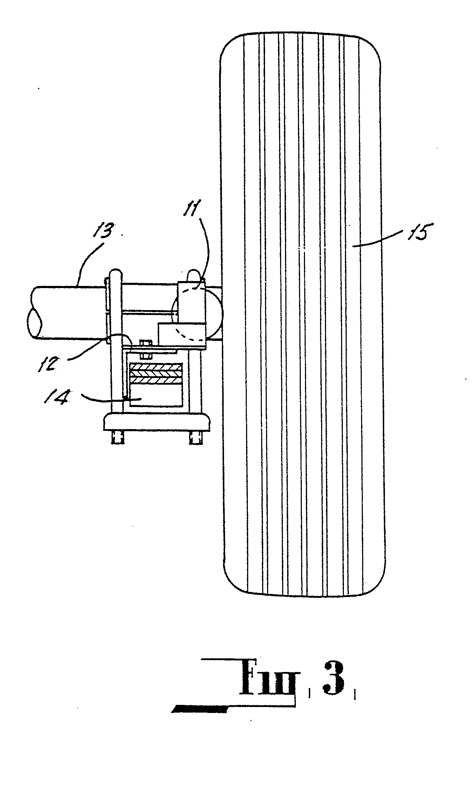

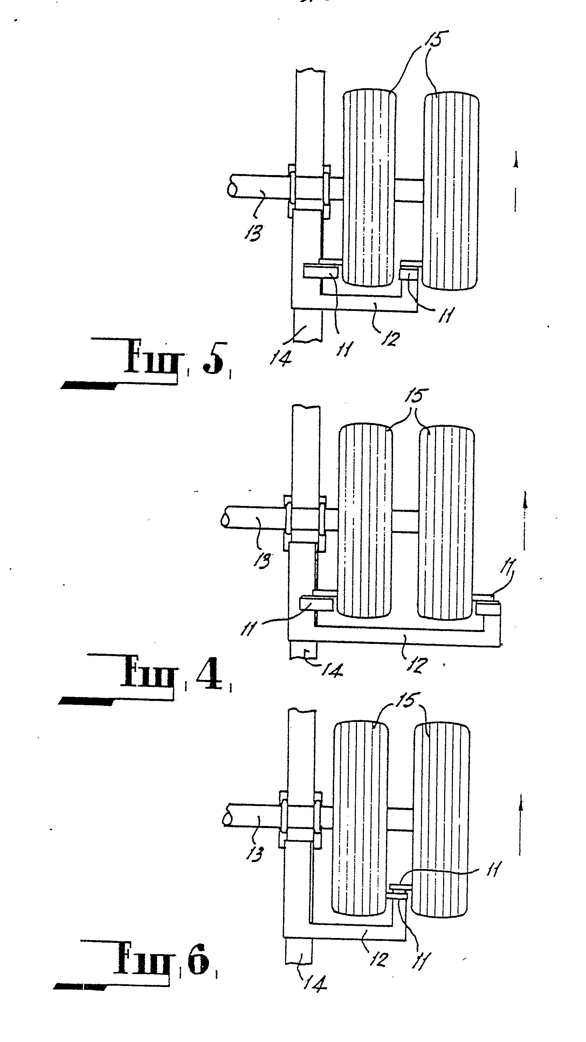

A form of mounting for the sensor 11 of the embodiment is shown at figures 1, 2 and 3 and comprises a support 12 extending laterally from the vehicle axle 13 above the leaf spring 14 of the vehicle whereby the embodiment can be located on the end of the support 12 adjacent the side wall of the tyre 15. The embodiment is positioned on the support 12 such that the roller is located in rolling engagement with the side wall of the tyre 15. With rotation of the wheel, the roller is maintained in constant engagement with the side wall of the tyre 15. A preferred method of mounting involves deflection of the tyre and then positioning the sensor accordingly whereby the desired outputs are obtained with the tyre deflated.

Due to the fact that the sensor 11 is located at a substantial position above the ground engaging portion of the tyre 15, the deformation of the tyre caused by such engagement does not substantially effect the position of the arm of the sensor 11. Therefore, the position of the arm of the sensor 11 is substantially independent of the nature of terrain encountered by the tyre in use. In addition, the position of the arm is substantially independent of the degree of load being carried by the vehicle.

A unit according to the embodiment is intended to be located adjacent each tyre of a vehicle to provide an input indicating the state of inflation of each tyre through the electrical circuit which is connected to the potentiometer and microswitch of each sensor 11. The circuit of the embodiment has a means of sequentially scanning the input received from each of the sender units and sequentially indicating on a visual display the magnitude of the signal being received from each sensor. As a result, the display which indicates the state of inflation of the tyres in the drivers cab can indicate to the driver whether each tyre of the vehicle is in a state of over or under inflation and in the case of the tyre being under inflated will give the driver adequate warning of the state of inflation of the tyre prior to a critical point of inflation being reached.

6

A form of circuit for use with the embodiment is shown at Figure 9. The circuit comprises a diode counter 20 having four output lines (3), (2), (4), and (7) connected to a quad bilateral switch 21. The counter is activated through a clock generator 22 to sequentially activate each of the outputs. On completion of a sequence of switching outputs the remaining six switching states of the counter are by-passed to return to the first output. Each output of the counter 20 also activates a light emitting diode 23 to provide a visual indication of the output currently being activated. Each switching state of the quad bilateral switch 21 has two inputs - one being the output from the counter 20 and the other being from the potentiometer 15 of one of the sensors located adjacent the wheels of the vehicle. On one output line from the counter providing a signal to the switch 21 the switch transmits the signal received from the corresponding potentiometer to a LED bar graph voltmeter 24 which will activate a number of the light emitting diodes 25 associated therewith in accordance with the magnitude of the signal from the potentiometer being transmitted. As a result the visual display provided by the circuit indicates the wheel currently under surveillance and also indicates the state of inflation of the tyre thereon.

The circuit also comprises a logic circuit which receives an output from the microswitches associated with each sensor. The logic circuit comprises four input lines from the respective microswitches each of which is associated with a NOR gate 26. Each NOR gate also receives an input from the output line of the counter 20 associated with the same sensor as the microswitch. The input from the counter 20 to the NOR gate is transmitted through a NAND gate 27 which serves as an inverter for the signal from the counter 20. On a NOR gate 26 receiving an appropriate input from both the microswitch and the counter a signal is transmitted to a pair of exclusive OR gates 28 and 29 connected in series. The final exclusive OR gate 29 provides a signal which activates an audible alarm 30. In addition, the signal from the final OR gate 29 through line 31, causes the counter 20 to remain locked onto the switching output for the sensor currently providing the signal to the respective NOR gate 26. On a tyre reaching a critical point of under inflation causing the associated microswitch to be activated the audible alarm 30 is activated. In addition, the visual display provided by the light emitting diodes 23 and 25 associated with the respective wheel is maintained in an active state. As a result, an indication of critical under inflation is given together with an indication of the tyre involved and a measure of the degree of inflation of the tyre.

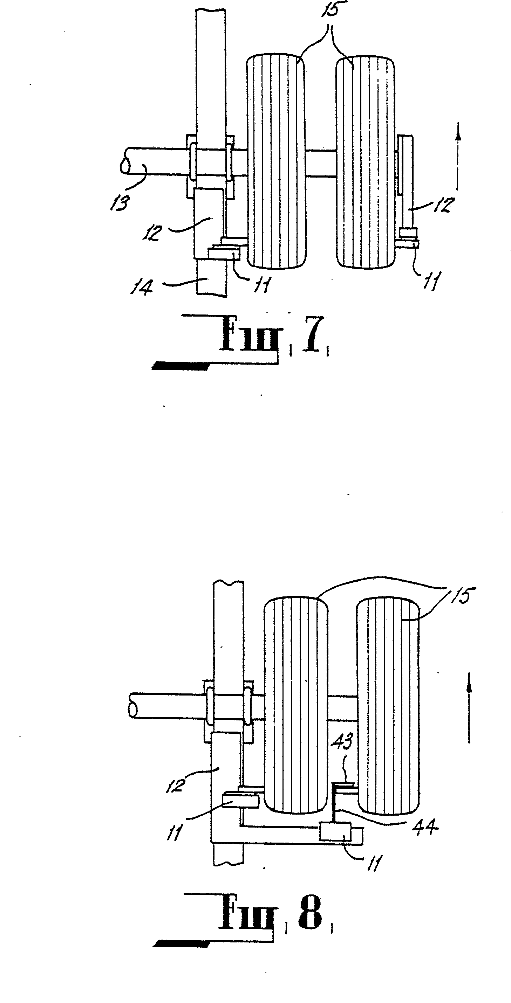

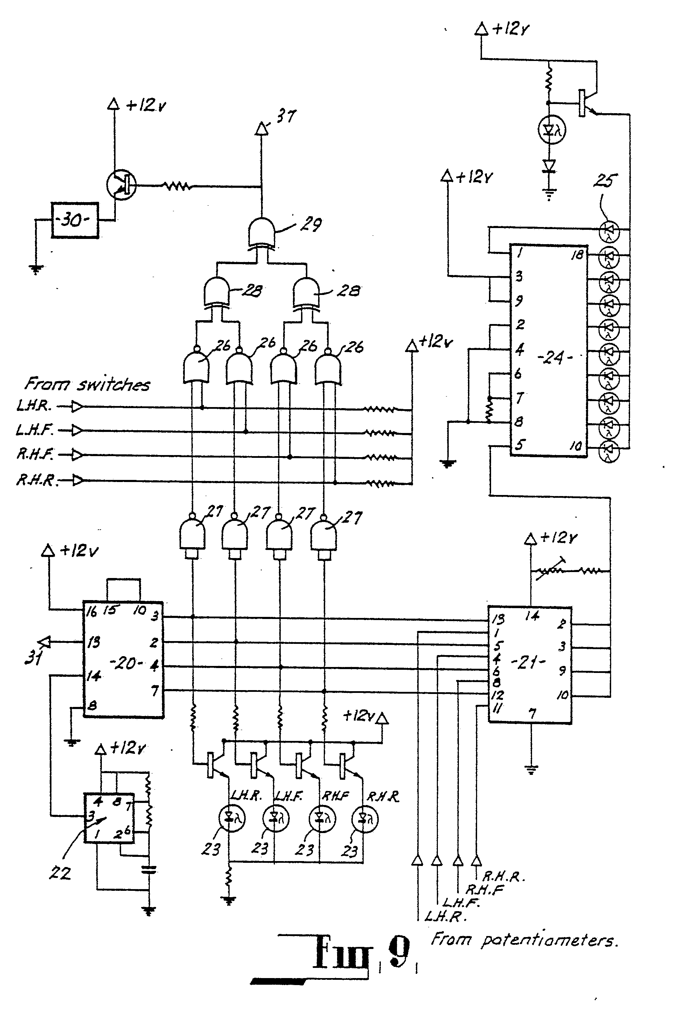

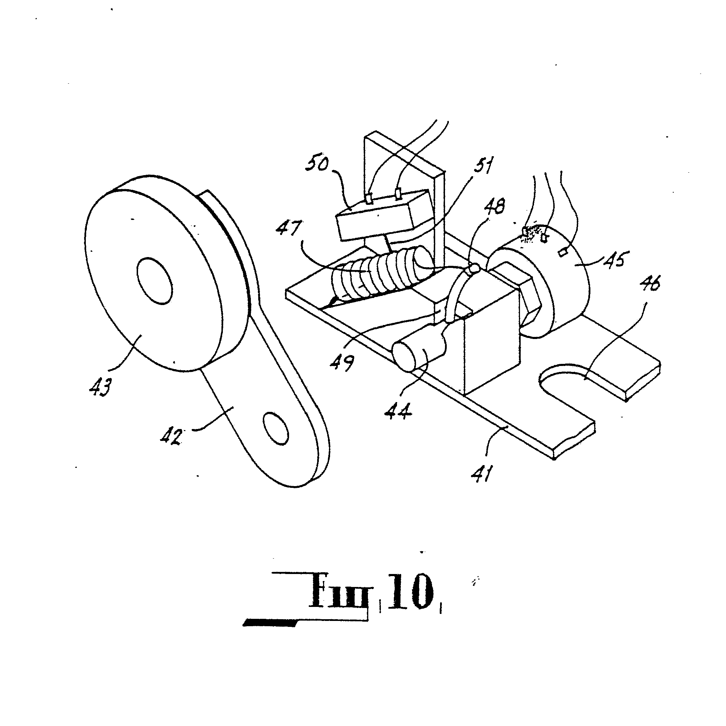

As shown in figures 4, 5, 6 and 7 where the embodiment is used in relation to a multi-wheeled axle, any desired arrangement may be used to position the sensor of the embodiment adjacent the side wall of each tyre. In addition, the support may be fixed to the springs or may be mounted to the axle to extend radially upwardly from the axle to support the sensor.

A further alternative form of mounting for a multiwheeled axle is shown at Figure 8 whereby the sensor 11 is mounted to a support 12 located adjacent the circumferential surface of the tyre. The sensor has an extended shaft 44 rotatably mounted to the housing and extending to a position adjacent the tyre side wall to support the arm 42 which carries the roller 43.

In addition to indicating the state of inflation of a tyre, the embodiment is also able to indicate lateral movement of the side wall of the tyre which may be associated with factors unrelated to the inflation of the tyre. Such factors may include worn bearings, loose wheel nuts, poor wheel alignment or other factors which produce a wobble in the wheel. Therefore, the invention provides a useful tool by indicating not only the state of inflation of the tyre but also the condition of the mounting of the wheel to the vehicle.

It should be appreciated that the scope of the present invention need not be limited to the particular scope of the embodiment described above. In particular, the sensor need not incorporate a potentiometer to indicate the state of inflation of the tyre but may include any device capable of producing a variable electrical, electromagnetic, ultrasonic or like signal to indicate the degree of displacement of the arm. In addition, the sensor need not include the microswitch or may include some suitable alternative to said microswitch. Furthermore the engagement of the arm with the side wall of the tyre need not be restricted to the use of a roller therebetween.

CLAIMS:

1. A tyre indicator comprising a base adapted to be mounted to a vehicle chassis adjacent a wheel of the vehicle; an arm pivotally mounted to said base, said arm being biassed such that a portion thereof is maintained in constant engagement with the side walls of the tyre; a sensor sensitive to the displacement of the arm with respect of the base; and a signalling device at the driving station of said vehicle to provide a signal indicating the state of displacement of the arm with respect to the base.

2. A tyre indicator as claimed at claim 1 wherein said portion of said arm incorporates means of reducing the friction of engagement between said arm and said side wall.

3. A tyre indicator as claimed at claim 2 wherein said means of reducing friction comprises a roller rotatably mounted to said arm about at least one axis which is transverse to the direction of movement of the side wall past the arm.

4. A tyre indicator as claimed at claim 1, 2 or 3 wherein the arm is pivotally mounted to said base via a shaft rotatably received in said base, said sensor comprises a potentiometer drivingly connected to said shaft, and said signalling device comprises electrical circuit means for translating the potential across said potentiometer into a visual and/or audio signal the magnitude of which is proportional to the magnitude of the potential.

5. A tyre indicator as claimed at any one of the preceding claims wherein said sensor also includes a switch activated on the movement of said arm past a predetermined position in its range of movement.

6. A tyre indicator as claimed at claim 5 wherein said signalling means comprises a visual display providing a visual measure of the state of inflation of the tyre and an audio and/or visual signal for indicating a critical state of inflation of the tyre.

7. A vehicle having a tyre indicator of the form as claimed at any one of the preceding claims mounted adjacent each wheel of the vehicle and said wherein signalling device is capable of signalling the output of each sensor.

8. A vehicle as claimed at claim 7 wherein said signalling device is capable of sequentially signalling the output of each sensor.

9. A vehicle as claimed at claim 8 wherein said signalling device has means of maintaining a visual display of a measure of inflation of a tyre on the state of inflation obtaining a predetermined level.

**Fig. 1.**

**Fig. 2.**

Fig. 3

0055516

Fig. 5

Fig. 4

Fig. 6

0055516

Fig. 7

Fig. 8

Fig. 9

Fig 10.